# EUROPEAN PATENT SPECIFICATION

(11) **EP 2 131 427 B1**
(45) Date of publication and mention of the grant of the patent: **17.08.2011**
(21) Application number: 09161696.1
(22) Date of filing: 02.06.2009
(51) Int. Cl.: H01M 4/86, H01M 4/88, H01M 8/02, H01M 8/12

(54) **Method of Producing a Fuel Cell**
Verfahren zur Herstellung einer Brennstoffzelle
Procédé de fabrication d'une Pile à Combustible

(30) Priority: 03.06.2008 JP 2008146138
(43) Date of publication of application: 09.12.2009
(73) Proprietor: Honda Motor Co., Ltd., Minato-ku Tokyo 107-8556 (JP)
(72) Inventor: Harada, Ushio, Saitama 351-0193 (JP)
(74) Representative: Prechtel, Jörg

(56) References cited:
- EP-A- 1 501 142
- EP-A- 1 806 805
- WO-A-2004/006365
- WO-A-2006/063163
- US-A1- 2003 015 431

## Description

### BACKGROUND OF THE INVENTION

### Field of the Invention:

The present invention relates to a method of producing a fuel cell having a unit cell where clearance between an electrolyte electrode assembly and a power generation area of a separator is filled.

### Description of the Related Art:

For example, an electrolyte electrode assembly (MEA) of a fuel cell is formed by stacking a solid electrolyte on an anode, and a cathode on the solid polymer electrolyte membrane. For example, the anode is made of cermet of NiO-yttria-stabilized zirconia (YSZ). Then, the MEA is sandwiched between a pair of separators to form a unit cell. NiO contained in the anode is reduced to Ni at the time of the first power generation.

In order to improve power generation characteristics of the fuel cell of this type, for example, in a possible approach, the internal resistance of the unit cell is reduced. From this viewpoint, attempts to improve the current collection efficiency of collecting electricity from the MEA have been made. Specifically, Japanese Laid-Open Patent Publication No. 2002-237312 proposes to provide a porous body of silver or silver alloy, or a porous metal body coated with silver or silver alloy between a separator and an air electrode (cathode), as a current collector. Further, Japanese Laid-Open Patent Publication No. 2004-355814 discloses a technique of forming a current collecting layer of metal on a surface of each electrode. The metal concentration of the current collecting layer is higher than that of the electrode.

The separator is fabricated, e.g., by pressure forming, and the MEA is fabricated by, e.g., firing. However, it is inevitable that warpage, waviness, distortion and the like remain in the separator and the MEA fabricated in this manner. Therefore, it is difficult to achieve tight contact between the separator and the MEA over the entire areas. In order to achieve tight contact between the separator and the MEA, i.e., in order to increase the contact area between the separator and the MEA, in a possible approach, the tightening load is increased. However, if the tightening load is increased excessively, cracks or the like may occur in the MEA and deformation may occur in the separator disadvantageously.

In the case where the surface area of the electrode or the surface area of the separator is large to adopt a fuel cell having a large size, when NiO in the anode is changed to Ni as mentioned above, warpage occurs in the anode. That is, deformation occurs in the entire MEA. Further, when the temperature of the fuel cell is raised for power generation, thermal expansion of the separator occurs. At this time, the amount of thermal expansion is not negligible. Therefore, clearance is formed in part between the MEA and the separator by separation of these components due to thermal expansion.

Under the circumferences, in the case where the current collecting layer is formed as described in Japanese Laid-Open Patent Publication No. 2002-237312 and Japanese Laid-Open Patent Publication No. 2004-355814, since the current collecting layer is separated from the separator, improvement in the current collection efficiency cannot be achieved. Further, in the case of applying a tightening load through the current collection layer, cracks may occur in the MEA, and deformation may occur in the separator.

Japanese Laid-Open Patent Publication No. 2005-056816 discloses the feature of using a porous electrical conductor having a plurality of openings as the current collector, and using a component having electrically conductive projections, as the separator or the electrode, in order to improve contact efficiency between the current collector and the separator or the electrode. According to the disclosure of Japanese Laid-Open Patent Publication No. 2005-056816, the contact efficiency between the current collector and the separator or the electrode is improved because the electrically conductive projections of the separator or the electrode enter the openings of the current collector, and then contact the walls of the openings. Further, according to the disclosure of Japanese Laid-Open Patent Publication No. 2005-056816, relative positional misalignment between the current collector and the separator or the electrode is avoided because the electrically conductive projections are latched in the openings.

However, the contact between the electrically conductive projections and the walls of the openings in the conventional technique disclosed in Japanese Laid-Open Patent Publication No. 2005-056816 is spot-like point-to-point contact. Therefore, significant improvement in the current collection efficiency is not easy.

Further, in this case, the electrically conductive projections may not be precisely in alignment with the openings. If the electrically conductive projections of the electrode contact positions where no openings of the current collector are present, one end surface of the electrode is pressed by the electrically conductive projections pressed by the current collector. Therefore, the electrode may be broken from the positions of the projections.

Further, since the electrically conductive projections and the current collector are made of metal, these components may be oxidized. In some cases, in the presence of poisonous chromium, the current collecting performance may be lowered undesirably.

Moreover, fabrication of the MEA or the separator having electrically conductive projections is laborious. The process of fabricating the unit cell is complicated, requiring significant amount of time disadvantageously.

WO 2006/063163 A shows porous current collector layers formed by applying a slurry and then removing of any binder, solvent plasticine or disperser which is done during manufacturing of the fuel cell but not during first operation thereof.

US 2003/015,431 shows fuel cell stacks with separators (interconnect layers 70) between adjacent unit cells. These interconnect layers 70 are provided with liquid channels and manifolds 80 forming "projections" therebetween. These interconnect layers are applied by thermal spraying, and buffer layers can be provided between the interconnecting layers and the anode/cathode layers for example made by ceramic or metal ceramic composite.

EP-A-1 501 142 discloses a collector made of porous elastic conductive material.

WO 2004/006365 A discloses a porous electron conductivity layer to avoid direct contact between the collector and a stress compensating layer or the anode, which is formed by a centering process.

EP-A-1 806 805 discloses porous intermediate layer between the substrate and the anode.

### SUMMARY OF THE INVENTION

A general object of the present invention is to provide a fuel cell including electrodes and separators having large surface areas, while achieving good current collection efficiency.

A main object of the present invention is to provide a fuel cell in which there is no concern of damages in the electrodes having large surface areas.

Another object of the present invention is to provide a method of producing the fuel cell easily.

According to the present invention, a method of producing a fuel cell having a unit cell including an electrolyte electrode assembly and a pair of separators sandwiching the electrolyte electrode assembly is provided in according with claim 1. The electrolyte electrode assembly includes an anode, a cathode, and a solid electrolyte interposed between the anode and the cathode.

The fuel cell further includes a buffer layer precursor for a buffer layer interposed at least one of between the anode and the separator and between the cathode and the separator.

The buffer layer precursor includes inorganic powder having electron conductivity, and an organic material having plasticity, and when the organic material is plastically deformed, the buffer layer precursor fills clearance between the anode or the cathode and a power generation area of the separator so as to tightly contact both of the anode or the cathode and the power generation area of the separator.

The organic material disappears when the unit cell is used for power generation reaction.

The buffer layer precursor having plasticity is deformed in accordance with warpage or waviness of the separators. Thus, the warpage and waviness are absorbed, and the electron conduction channel from the electrode to the separator, or from the separator to the electrode is provided through the inorganic powder of the buffer layer precursor provided between the separator and the electrode.

That is, by providing the buffer layer precursor between the separator and the electrode, the fuel cell having good current collection efficiency and power generation characteristics is obtained.

The power generation area corresponds to an area where power generation reactions occur in the fuel cell.

Preferably, the buffer layer precursor is plastically deformable by weights of the separators and the electrolyte electrode assembly when the separators and the electrolyte electrode assembly are stacked together to form the unit cell. In this case, simply by forming the unit cell, the buffer layer precursor can be deformed plastically easily, and operation of producing the fuel cell becomes considerably easy.

Specifically, it is preferable that the buffer layer precursor generates a buffering effect by plastic deformation when a load of 3.5 kgf/m² is applied to the buffer layer precursor. The "buffering effect" herein mean an "effect of absorbing warpage, waviness, or distortion of the anode or the cathode, and enhancing tight contact between the anode or the cathode and the separator".

In any of the cases, the organic material of the buffer layer precursor chiefly includes thermoplastic resin, and the weight ratio of the organic material to the inorganic powder is in the range of 5:95 to 95:5, and the inorganic powder has electron conductivity of 10 S/cm or more. Thus, it becomes easy to form the buffer layer precursor, and the desired current collection efficiency is maintained.

Further, preferably, the inorganic powder has a specific surface area in the range of 1 to 15 m²/g. In this case, it becomes easy to control the contraction ratio when the buffer layer precursor is changed into the buffer layer.

According to claim 1, the separators have projections at least at one of an end surface facing the anode and an end surface facing the cathode. In this case, the projections bite into the buffer layer precursor like spikes, and the contact area with the buffer layer precursor is increased. Accordingly, further improvement in the current collection efficiency is achieved.

As described above, the organic material of the buffer layer precursor is eventually eliminated by vaporization when the unit cell is used for power generation reactions. It should be noted that the present invention includes this state. That is, according to another embodiment of the present invention, a fuel cell having a unit cell including an electrolyte electrode assembly and a pair of separators sandwiching the electrolyte electrode assembly is provided, and the electrolyte electrode assembly includes an anode, a cathode, and a solid electrolyte interposed between the anode and the cathode.

The fuel cell further includes a porous buffer layer of inorganic powder having electron conductivity. The buffer layer is interposed at least one of between the anode and the separator and between the cathode and the separator.

The buffer layer fills clearance between the anode or the cathode and a power generation area of the separator to tightly contact both of the anode or the cathode and the power generation area of the separator, and the inorganic powder performs current collection when the unit cell is used for power generation reaction.

The buffer layer maintains the shape of the buffer layer precursor which has been deformed plastically as described above. By providing the buffer layer between the electrode and the separator, the current collection efficiency is maintained.

It is a matter of course that the thickness of the buffer layer corresponds to the amount of initial distortion (sum of warpage, waviness and the like) present in the electrolyte electrode assembly or the separator. Thus, clearance other than the reactant gas channel is filled, and after all, the desired current collection efficiency is maintained further reliably.

As described above, the inorganic powder has the electron conductivity of 10 S/cm or more. In this case, it is further preferable that the inorganic powder has a specific surface area in the range of 1 to 15 m²/g.

Further, for the reason as described above, preferably, projections are formed on the separator, on at least one of an end surface facing the anode and an end surface facing the cathode.

The method includes the steps of mixing inorganic powder having an electron conductivity and an organic material to obtain a slurry, forming a sheet of a buffer layer precursor for a buffer layer using the slurry, and producing the fuel cell having the unit cell including the buffer layer precursor. At this time, the buffer layer precursor is provided at least one of between the anode and the separator and between the cathode and the separator. Further, the method includes the step of plastically deforming the buffer layer precursor to fill clearance between the anode or the cathode and a power generation area of the separator for allowing the buffer layer precursor to tightly contact the anode or the cathode and the power generation area of the separator.

That is, in this case, the buffer layer precursor is fabricated in a form of a sheet. Alternatively, a slurry is coated as the buffer layer precursor. Specifically, according to still another embodiment of the present invention, a method of producing a fuel cell having a unit cell including an electrolyte electrode assembly and a pair of separators sandwiching the electrolyte electrode assembly is provided. The electrolyte electrode assembly includes an anode, a cathode, and a solid electrolyte interposed between the anode and the cathode. The method includes the steps of: mixing inorganic powder having electron conductivity and an organic material to obtain a slurry; applying the slurry to at least one of an end surface of the anode facing the separator and an end surface of the cathode facing the separator or at least one of an end surface of the separator facing the anode and an end surface of the separator facing the cathode to form a buffer layer precursor for a buffer layer; and producing the fuel cell having the unit cell including the buffer layer precursor. The buffer layer precursor is provided at least one of between the anode and the separator and between the cathode and the separator.

Further, the method includes the step of plastically deforming the buffer layer precursor to fill clearance between the anode or the cathode and a power generation area of the separator for allowing the buffer layer precursor to tightly contact the anode or the cathode and the power generation area of the separator.

As described above, the present invention is simply carried out by the step of forming the buffer layer precursor in a form of a sheet or the step of applying a slurry to form the buffer layer precursor, in addition to normal operation of producing the unit cell. That is, operation of producing the unit cell, and the fuel cell is not complicated.

Further, the buffer layer precursor can be changed into the buffer layer by eliminating an organic material from the buffer layer precursor by the step of raising the temperature of the fuel cell. Thus, the porous buffer layer of inorganic powder having the desired characteristics for current collection is formed.

The temperature raising process can be performed at the time of operating the fuel cell for the first time. That is, no specific heating process for changing the buffer layer precursor into the buffer layer is required.

The above and other objects, features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a longitudinal sectional view schematically showing the entire unit cell of a fuel cell according to an embodiment of the present invention;
FIG. 2 is a longitudinal sectional view schematically showing the entire unit cell according to another embodiment of the present invention in a state where buffer layer precursors in FIG. 1 have been changed into buffer layers; and
FIG. 3 is a graph showing the relationship between the magnitude of warpage/waviness in electrolyte electrode assemblies and separators, in the fuel cell according to the embodiment of the present invention and in a fuel cell which does not have any buffer layer.

### DESCRIPTION OF THE PREFERRED EMBODIMENTS

Hereinafter, a fuel cell according to a preferred embodiment of the present invention will be described in detail with reference to the drawings.

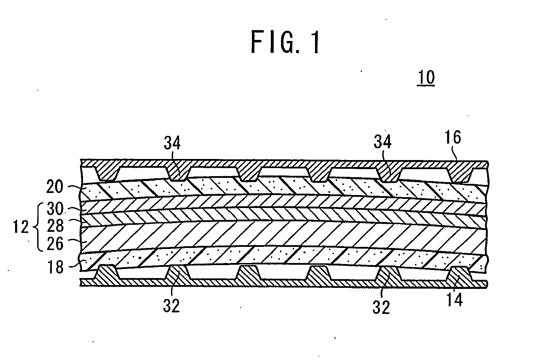

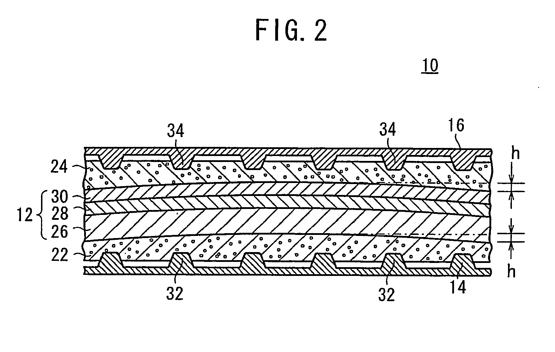

FIG. 1 is a longitudinal sectional view schematically showing the entire unit cell 10 a fuel cell according to an embodiment of the present invention. The unit cell 10 includes an MEA 12, a pair of separators 14, 16 sandwiching the MEA 12, and buffer layer precursors 18, 20 interposed between the MEA 12 and the separators 14, 16. As described later, eventually, the buffer layer precursors 18, 20 are changed into buffer layers 22, 24 (see FIG. 2).

In the MEA 12 shown in FIG. 1, the state of warpage after fabrication of the MEA 12 is exaggerated. The front ends of projections 32 of the separator 14 enter the buffer layer precursor 18 at the periphery of the MEA 12, and contacts the end surface of the buffer layer precursor 18 only at the center of the MEA 12. The front ends of projections 34 of the separator 16 enter the buffer layer precursor 20 at the center of the MEA 12, and only contacts the end surface of the buffer layer precursor 20 at the periphery of the MEA 12. In this state, the contact resistance is large.

The MEA 12 is formed by stacking a solid electrolyte 28 on an anode 26, and stacking a cathode 30 on the solid electrolyte 28. Among these components, as the material of the anode 26, preferably, cermet of Ni and ceramics is adopted. Specifically, examples of ceramics include yttria-stabilized zirconia (YSZ) containing Y₂O₃ solid solution of 8 to 10 mol%, scandia-stabilized zirconia (SSZ) containing Sc₂O₃ solid solution of 9 to 12 mol%, and samarium doped ceria (SDC). In the embodiment of the present invention, the anode 26 is made of cermet of Ni-YSZ, and has a thickness of 200 to 500 µm.

As the material of the solid electrolyte 28, material showing high oxide ion conductivity is adopted. Specifically, for example, SSZ is adopted. It should be noted that, in general, the thickness of the solid electrolyte 28 is in the range of about 5 to 20 µm.

As in the case of the solid electrolyte 28, the thickness of the cathode 30 is in the range of about 5 to 20 µm. Preferably, the cathode 30 is made of a material selected from a group consisting of La-CO-O based perovskite oxide, La-Sr-Co-O (LSC) based perovskite oxide, La-Sr-Co-Fe-O (LSCF) based perovskite oxide, or a mixed material of any of these perovskite oxides and a fluorite type oxide such as CeO₂ solid solution with Sm₂O₃ (SDC), CeO₂ solid solution with Y₂O₃ (YDC), CeO₂ solid solution with Gd₂O₃ (GDC), CeO₂ solid solution with La₂O₃ (LDC). In the embodiment of the present invention, LSCF based perovskite oxide is used.

The MEA 12 having structure as described above is interposed between the separators 14, 16. The projections 32 protruding toward the anode 26 are formed at the end surface of the separator 14 facing the anode 26, and the projections 34 protruding toward the cathode 30 are formed at the end surface of the separator 16 facing the cathode 30, respectively. A fuel gas or an oxygen-containing gas flows through the clearance formed between the projections 32, 34 and the buffer layers 22, 24 (see FIG. 2) changed from the buffer layer precursor 18, 20 as described later. That is, the projections 32, 34 form reactant gas channels for these reactant gases.

In the embodiment, the buffer layer precursors 18, 20 are interposed between the MEA 12 and the separators 14, 16, i.e., between the separator 14 and the anode 26, and between the cathode 30 and the separator 16, respectively (see FIG. 1). In this case, the buffer layer precursors 18, 20 contain inorganic powder and an organic material in the range of 5:95 to 95:5 in weight ratio. In the case where percentage of the organic material exceeds 95 weight%, it is not easy to obtain the porous buffer layers 22, 24 as descried later. In the case where the percentage of the organic material is less than 5 weight%, the buffer layer precursors 18, 20 cannot be formed into sheets, or used as a slurry.

Preferably, the inorganic powder contained in the buffer layer precursor 18 interposed between the separator 14 and the anode 26 has the electron conductivity of 10 S/cm or more, in order to achieve the good current collection efficiency. That is, metals such as Ni, Pt, Pd, Cu, Fe, Au, Ag, Ru or metal oxides such as NiO, CuO, FeO, Fe₂O₃ may be used. Alternatively, cermet material such as NiO-YSZ, NiO-SDC, NiO-ScSZ (scandia stabilized zirconia), or composite oxides such as LaSrCrO₃, or LaSrTiO₃ may be used.

Further, preferably, the inorganic powder has a specific surface area in the range of 1 to 15 m²/g. In this case, at the time of raising the temperature to obtain the buffer layers 22, 24 from the buffer layer precursors 18, 20, the contraction ratio can be controlled easily so that the degree of sintering the buffer layer precursors 18, 20 can be controlled, and the buffer layers 22, 24 tightly contact the separators 14, 16 and the MEA 12 at all times.

In the case where inorganic powder having a specific surface area smaller than 1 m²/g is adopted, sintering performance is lowered, and only the inorganic powder remains. The contact between the buffer layers 22, 24 and the separators 14, 16 or the MEA 12 tend to be so called point-to-point contact. Therefore, the contact resistance tends to be high undesirably. In the case where inorganic powder having a specific surface area larger than 15 m²/g is adopted, the contraction ratio when the buffer layer precursors 18, 20 are changed into the buffer layers 22, 24 becomes high. Thus, peel-off may occur at the interface between the buffer layers 22, 24 and the separators 14, 16 or the MEA 12. In this case, it is inevitable that the contact resistance becomes high.

The organic material chiefly contains a thermoplastic resin, and additionally contains, e.g., a solvent, a plasticizer and a dispersant. Among these components, the thermoplastic resin functions as a binder for binding inorganic powder particles, and allows the buffer layer precursor 18 to have plasticity. That is, the buffer layer precursor 18 has flexibility in the presence of thermoplastic resin.

Specifically, preferred examples of the thermoplastic resin include cellulose based thermoplastic resin, polyacrylate based thermoplastic resin, polyvinyl butyrate based thermoplastic resin, polyvinyl alcohol based thermoplastic resin, polymethacrylate based thermoplastic resin, and ethylene vinyl acetate based thermoplastic resin. Two or more materials having different glass transition temperatures may be mixed together.

Though the plasticizer is not essential, same as the thermoplastic resin, the plasticizer allows the buffer layer precursor 18 to have plasticity, and allows the buffer layer precursor 18 to have further flexibility. Therefore, assuming that the volume of the thermoplastic resin is 1, it is preferable that the plasticizer is added in the volume ratio in the range of 0.1 to 1. As the plasticizer of this type, for example, an ammonium salt of polycarboxylic acid, an ester type nonionic surfactant or the like may be adopted.

Though the dispersant is not essential as well, it prevents aggregation of inorganic powder in the buffer layer precursor 18. Thus, the inorganic powder is substantially equally dispersed in the thermoplastic resin (binder). Therefore, assuming that the volume of the thermoplastic resin is 1, it is preferable that the dispersant is added in the volume ratio of 0.1 or less. As the dispersant of this type, specifically, for example, dibutyl phthalate, diisodecyl phtalate, glycerin, saccharose acetate isobutyrate may be adopted.

Preferably, the inorganic powder contained in the buffer layer precursor 20 interposed between the cathode 30 and the separator 16 has electron conductivity of 10 S/cm or more to achieve the desired current collection efficiency. Specifically, examples of the inorganic powder include LSC based oxides, LSCF based oxides, La-Co (LC) based oxides, La-Sr-Mn (LSM) based oxides, Ba-Sr-Co (BSC) based oxides, Ba-Sr-Co-Fe (BSCF) based oxides, Sm-Sr-Co based oxides and Pt, Au, Ag. Preferably, for the same reason in the case of the inorganic powder as described above, this inorganic powder has a specific surface area in the range of 1 to 15 M²/g.

The components in the organic material contained in the buffer layer precursor 20 and functions thereof are the same as the components in the organic material contained in the buffer layer precursor 18 and functions thereof, and detailed description is omitted.

Both of the buffer layer precursors 18, 20 are plastically deformable by the weight of the MEA 12 in the temperature between 50°C and 500°C. The load by the weight of the MEA 12 is about 3.5 kgf/m². Therefore, plastic deformation starts in the buffer layer precursor 18, 20 when the load reaches 3.5 kgf/m². However, before such a load is applied, the buffer layer precursors 18, 20 have already been deformed gradually by buffering effects. In general, the fuel cell has stack structure formed by stacking a plurality of unit cells 10. In this case, the tightening load applied to the fuel cell is about 15 kgf.

A single unit cell 10, or stack structure including a plurality of unit cells 10 functions as the fuel cell. When the temperature of the fuel cell is raised to a predetermined temperature for power generation, NiO contained in the anode 26 is reduced to Ni. Therefore, as shown in FIG. 2, warpage or waviness having the maximum size of "h" occurs. Consequently, warpage occurs in the MEA 12 as a whole.

At the same time, vaporization of organic material is started in the buffer layer precursors 18, 20. Further, since the thermoplastic resin as the main component of the organic material has plasticity, it is deformed actively until the temperature becomes the glass transition temperature (about 200°C). That is, as can be seen from FIG. 2, deformation occurs in correspondence with warpage of the MEA 12, at positions between the separator 14 and the anode 26, and between the cathode 30 and the separator 16. As a result, the buffer layer precursor 18 tightly contacts the projections 32 of the separator 14 and the anode 26 to fill the clearance between the projections 32 of the separator 14 and the anode 26. Likewise, the buffer layer precursor 20 tightly contacts the cathode 30 and the projections 34 of the separator 16 to fill the clearance between the cathode 30 and the projections 34 of the separator 16.

Eventually, all of the organic materials of the buffer layer precursors 18, 20 are vaporized. In the meanwhile, during vaporization, inorganic powders are melted together. As a result, porous bodies formed of the melted inorganic powders remain at the positions between the projections 32 of the separator 14 and the anode 26, and between the cathode 30 and the projections 34 of the separator 16. The porous bodies form the buffer layers 22, 24.

The thicknesses of the buffer layer precursors 18, 20 are determined such that the buffer layers 22, 24 have the thickness to fill in the gap having the size "h". However, since the MEA 12 is flattened slightly by the weight of the unit cell 10 and the tightening load, preferably the thicknesses of the buffer layer precursors 18, 20 are slightly smaller than the size "h".

As described above, the buffer layers 22, 24 are porous layers. Therefore, the fuel gas supplied from the separator 14 and the oxygen-containing gas supplied from the separator 16 move through the pores in the buffer layers 22, 24 toward the anode 26 and the cathode 30. That is, through the buffer layers 22, 24 are provided, the flows of the reactant gases are not obstructed.

Further, the buffer layer 22 tightly contacts the power generation area (projections 32) of the separator 14 and the anode 26, and the buffer layer 24 tightly contacts the cathode 30 and the power generation area (projections 34) of the separator 16. The buffer layers 22, 24 are formed when inorganic powders having good electron conductivity are melted together. That is, the buffer layers 22, 24 having good electron conductivity are adhered to the projections 32 of the separator 14 and the anode 26, and the projections 34 of the separator 16 and the cathode 30 over the entire areas. Therefore, electrons are transmitted between the anode 26 and the cathode 30 efficiently. As a result, the fuel cell having good power generation characteristics is produced.

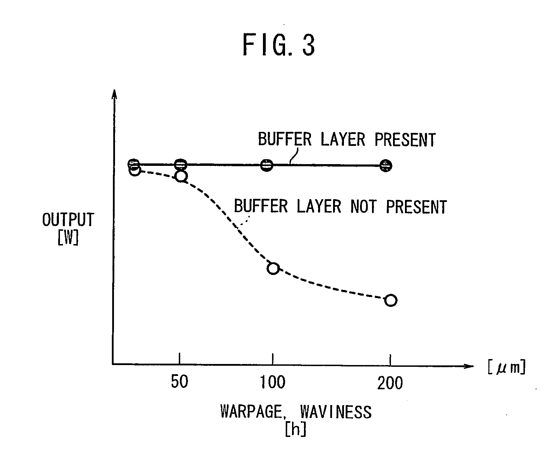

In the following example, a fuel cell having a unit cell 10 formed by sandwiching a buffer layer 22 of NiO, an anode 26 of Ni-YSZ having a thickness of 500 µm, a solid electrolyte 28 of YSZ having a thickness of 5 µm, a diffusion prevention layer of GDC having a thickness of 5 µm, a cathode 30 of an LSCF based oxide having a thickness of 20 µm, and a buffer layer 24 of an LSC based oxide between separators 14, 16, and a fuel cell having the same structure except the absence of the buffer layers 22, 24 are compared. FIG. 3 is a graph showing the relationship between the fuel cell output and the size "h" of warpage and waviness of the MEA 12. It is a matter of course that the buffer layers 22, 24 fill the size "h", and tightly contact the projections 32 of the separator 14 and the anode 26, and the cathode 30 and the projections 34 of the separator 16.

As can be seen from FIG. 3, in the fuel cell which does not have the buffer layers 22, 24, as the warpage/waviness becomes large, the output is lowered. In contrast, in the fuel cell having the buffer layers 22, 24 according to the embodiment of the present invention, in the case where the warpage/waviness having the size "h" is in a range of 50 to 200 µm, even if the warpage/waviness "h" becomes large, it is clear that the desired output is almost maintained.

In consideration of the above, in the fuel cell according to the embodiment of the present invention, even if the surface areas of the electrodes and the surface areas of the separators 14, 16 are large, warpage/waviness of the MEA 12 and the separators 14, 16 are suitably absorbed, and the buffer layers 22, 24 tightly contacts the MEA 12 and the power generation areas of the separators 14, 16. Thus, the desired current collection efficiency is maintained, and thus improvement in the power generation characteristics of the fuel cell is achieved.

Further, in the embodiment of the present invention, since no electrically conductive projections are required in the MEA 12, the MEA 12 does not have any element which may cause damages in the electrodes.

The fuel cell can be produced in the following manner.

In a first production method, the buffer layer precursors 18, 20 are fabricated in a form of sheet. In this case, firstly, the MEA 12 is fabricated. Specifically, a slurry formed, e.g., by adding SSZ powder to a solvent together with a binder is applied to sintered material of NiO-YSZ (anode 26). Thereafter, the solid electrolyte 28 is formed by firing.

Then, a slurry formed, e.g., by adding powder of an LSCF based oxide to a solvent together with a binder is applied to the solid electrolyte 28. Thereafter, the slurry is fired to form the cathode 30. In this manner, the MEA 12 is fabricated. As the solvent, for example, ethanol, toluene, terpineol, or butyl carbitol is adopted. Thereafter, the slurry is fabricated into sheets by sheet forming.

The sheets are interposed between the MEA 12 obtained as described above and the separators 14, 16. The sheets having plasticity interposed between the MEA 12 and the separators 14, 16 absorb waviness inevitably created at the end surfaces of the MEA 12 and the separators 14, 16 (see FIG. 1).

Then, by hot pressing, the sheets are joined to the MEA 12. The projections 32, 34 of the separators 14, 16 enter the sheets. In this state, the sheets are joined to the separators 14, 16.

Then, as mentioned above, the sheets are deformed plastically, and the fuel cell is heated. As a result, the organic material is vaporized from the sheets (buffer layer precursors 18, 20). Thus, the porous buffer layers 22, 24 (see FIG. 2) of melted inorganic powder are obtained.

In a second production method, the buffer layer precursors 18, 20 are formed by printing. In this case, the MEA 12 is fabricated in accordance with the above procedure, and a slurry to form the buffer layer precursor 18, and a slurry to form the buffer layer precursor 20 are prepared.

Then, the slurry to form the buffer layer precursor 18 is applied to the exposed end surface of the anode 26, and the slurry to form the buffer layer precursor 20 is applied to the exposed end surface of the cathode 30. Thus, the buffer layer precursors 18, 20 are formed on the MEA 12.

Then, the separator 14 is provided on the buffer layer precursor 18 such that the projections 32 of the separator 14 tightly contact the buffer layer precursor 18, and the separator 16 is provided on the buffer layer precursor 20 such that the projections 34 of the separator 16 tightly contact the buffer layer precursor 20 to form the fuel cell having the buffer layer precursors 18, 20.

Thereafter, as described above, the buffer layer precursors 18, 20 are deformed plastically, and the fuel cell is heated. As a result, the organic material is vaporized from the buffer layer precursors 18, 20. Thus, the porous buffer layers 22, 24 (see FIG. 2) of the melted inorganic powder are obtained.

The fuel cell having stack structure can be obtained by staking unit cells 10, and tightening the unit cells 10 using tie-rods.

As described above, in the embodiment of the present invention, without requiring laborious operation, the unit cell 10, and the fuel cell can be produced easily.

In the second production method, the slurry to form the buffer layer precursor 18, and the slurry to form the buffer layer precursor 20 may be coated on all of the projections 32, 34 of the separators 14, 16, respectively. It is a matter of course that the slurry to form the buffer layer precursor 18 may be coated on all of the projections 32 of the separator 14, and the slurry to form the buffer layer precursor 20 may be coated on the cathode 30. Alternatively, the slurry to form the buffer layer precursor 18 may be coated on the anode 26, and the slurry to form the buffer layer precursor 20 may be coated on all of the projections 34 of the separator 16.

Further, in the embodiment as described above, the anode 26 and the cathode 30 are directly stacked on the end surfaces of the solid electrolyte 28, respectively. Alternatively, an intermediate layer may be provided between the solid electrolyte 28 and at least one of the electrodes, for preventing reaction between the electrode and the solid electrolyte 28.

Further, both of the buffer layer precursors 18, 20 or buffer layers 22, 24 may not necessarily be provided at the same time. Only the buffer layer precursor 18 or the buffer layer 22 may be provided between the separator 14 and the anode 26, or only the buffer layer precursor 20 or the buffer layer 24 may be provided between the cathode 30 and the separator 16.

A unit cell 10 of a fuel cell includes an electrolyte electrode assembly MEA 12, a pair of separators 14, 16 sandwiching the MEA 12, and a buffer layer 22 at least provided between the MEA 12 and at least one of the separators 14, 16. The buffer layer 22, 24 is made of porous body formed by melting inorganic powder. A buffer layer precursor 18, 20 contains the inorganic powder and an organic material, and the organic material is vaporized from the buffer layer precursor 18, 20 to obtain the buffer layer 22, 24. The buffer layer 22, 24 fills clearance between projections 32 of the separator 14 and the anode 26 or the cathode 30, and tightly contacts the projections 32 of the separator 14 and the anode 26 or the cathode 30.

## Claims

1. A method of producing a fuel cell having a unit cell (10) including an electrolyte electrode assembly (12) and a pair of separators (14, 16) sandwiching the electrolyte electrode assembly (12), the electrolyte electrode assembly (12) including an anode (26), a cathode (30), and a solid electrolyte (28) interposed between the anode (26) and the cathode (30) wherein the separators (14, 16) have projections (32, 34) at least at one of an end surface facing the anode (26) and an end surface facing the cathode (30) forming a power generation area of the separator (18, 20),
the method comprising the steps of:
mixing inorganic powder having an electron conductivity and an organic material to obtain a slurry;
providing a buffer layer precursor (18, 20) formed by the slurry at least one of between the anode (26) and the separator (14) and between cathode (30) and the separator (16),
producing the fuel cell having the unit cell (10) including the buffer layer precursor (18, 20), and plastically deforming the buffer layer precursor (18, 20) to fill clearance between the anode (26) or the cathode (30) and the projections (32, 34) to tightly contact the anode (26) or the cathode (30) and the projections (32, 34) of the separator (14, 16),
wherein a temperature of the fuel cell is raised at the time of operating the fuel cell for the first time to eliminate the organic material from the buffer layer precursor (18, 20) so that the buffer layer precursor (18, 20) is changed into a porous buffer layer (22, 24) of the inorganic powder, and reactant gas channels are formed between the projections (32, 34) and the buffer layer (22, 24).

2. A production method according to claim 1, wherein the slurry is used to form the buffer layer precursor (18, 20) in a form of a sheet, and the sheet is provided at least one of between the anode (26) and the separator (14) and between cathode (30) and the separator (16).

3. A production method according to claim 1, wherein the slurry is applied to at least one of an end surface of the anode (26) facing the separator (14) and an end surface of the cathode (30) facing the separator (16) or at least one of an end surface of the separator (14) facing the anode (26) and an end surface of the separator (16) facing the cathode (30) in order to form the buffer layer precursor (18, 20).

## Patentansprüche

1. Verfahren der Herstellung einer Brennstoffzelle mit einer Einheitszelle (10), die eine Elektrolytelektrodenanordnung (12) und ein Paar von die Elektrolytelektrodenanordnung (12) zwischen sich aufnehmenden Separatoren (14, 16) enthält, wobei die Elektrolytelektrodenanordnung (12) eine Anode (26), eine Kathode (30) und einen zwischen der Anode (26) und der Kathode (30) eingefügten Festelektrolyten (28) enthält, wobei die Separatoren (14, 16) an einer zur Anode (26) weisenden Endoberfläche und/oder einer zur Kathode (30) weisenden Endoberfläche, die eine Stromerzeugungsfläche (18, 20) des Separators bilden, Vorsprünge (32, 34) aufweisen,
wobei das Verfahren die Schritte umfasst:
Mischen von eine Elektrodenleitfähigkeit aufweisendem anorganischem Pulver und von organischem Material zum Erhalt einer Schlämme;
Vorsehen eines durch die Schlämme gebildeten Pufferschichtvorläufers (18, 20) zwischen der Anode (26) und dem Separator (14) und/oder zwischen der Kathode (30) und dem Separator (16),
Herstellen der Brennstoffzelle mit der den Pufferschichtvorläufer (18, 20) enthaltenen Einheitszelle (10), und plastisches Verformen des Pufferschichtvorläufers (18, 20) zum Füllen eines Abstands zwischen der Anode (26) oder der Kathode (30) und den Vorsprüngen (32, 34), um die Anode (26) oder die Kathode (30) und die Vorsprünge (32, 34) des Separators (14, 16) in engen Kontakt zu bringen,
wobei eine Temperatur der Brennstoffzelle beim erstmaligen Betrieb der Brennstoffzelle angehoben wird, um das organische Material aus dem Pufferschichtvorläufer (18, 20) zu eliminieren, so dass sich der Pufferschichtvorläufer (18, 20) in eine poröse Pufferschicht (22, 24) des anorganischen Pulvers ändert, und Reaktionsgaskanäle zwischen den Vorsprüngen (32, 34) und der Pufferschicht (22, 24) gebildet werden.

2. Herstellungsverfahren nach Anspruch 1, worin die Schlämme verwendet wird, um den Pufferschichtvorläufer (18, 20) in Form einer Schicht zu bilden, und die Schicht zwischen der Anode (26) und dem Separator (24) und/oder zwischen der Kathode (30) und dem Separator (16) vorgesehen wird.

3. Herstellungsverfahren nach Anspruch 1, worin die Schlämme auf eine zum Separator (14) weisende Endoberfläche der Anode (26) und/oder eine zum Separator (16) weisende Endoberfläche der Kathode (30) oder auf eine zur Anode (26) weisende Endoberfläche des Separators (14) und/oder eine zur Kathode (30) weisende Endoberfläche des Separators (16) aufgetragen wird, um den Pufferschichtvorläufer (18, 20) zu bilden.

## Revendications

1. Procédé de fabrication d'une pile à combustible comportant une pile unitaire (10) comprenant un ensemble électrode électrolytique (12) et une paire de séparateurs (14, 16) prenant en sandwich l'ensemble électrode électrolytique (12), l'ensemble électrode électrolytique (12) comprenant une anode (26), une cathode (30), et un électrolyte solide (28) interposé entre l'anode (26) et la cathode (30), dans lequel les séparateurs (14, 16) comportent des saillies (32, 34) à au moins l'une d'une surface d'extrémité faisant face à l'anode (26) et d'une surface d'extrémité faisant face à la cathode (30) formant une zone de génération d'énergie du séparateur (18, 20),
le procédé comprenant les étapes consistant à :
mélanger une poudre inorganique ayant une conductivité d'électrons et une matière organique pour obtenir une boue ;
disposer un précurseur de couche tampon (18, 20) formé par la boue à au moins l'un des deux emplacements suivants : entre l'anode (26) et le séparateur (14) et entre la cathode (30) et le séparateur (16),
fabriquer la pile à combustible comportant la pile unitaire (10) comprenant le précurseur de couche tampon (18, 20), et effectuer une déformation plastique du précurseur de couche tampon (18, 20) pour remplir les espaces libres entre l'anode (26) ou la cathode (30) et les saillies (32, 34) afin d'établir un contact étroit entre l'anode (26) ou la cathode (30) et les saillies (32, 34) du séparateur (14, 16),
dans lequel une température de la pile à combustible est augmentée au moment du fonctionnement de la pile à combustible pour la première fois afin d'éliminer la matière organique du précurseur de couche tampon (18, 20) de sorte que le précurseur de couche tampon (18, 20) est changé en une couche tampon poreuse (22, 24) de la poudre inorganique, et des canaux de gaz réactif sont formés entre les saillies (32, 34) et la couche tampon (22, 24).

2. Procédé de fabrication selon la revendication 1, dans lequel la boue est utilisée pour former le précurseur de couche tampon (18, 20) sous forme de feuille, et la feuille est disposée à au moins l'un des deux emplacements suivants : entre l'anode (26) et le séparateur (14) et entre la cathode (30) et le séparateur (16).

3. Procédé de fabrication selon la revendication 1, dans lequel la boue est appliquée à au moins l'une d'une surface d'extrémité de l'anode (26) faisant face au séparateur (14) et une surface d'extrémité de la cathode (30) faisant face au séparateur (16) ou à au moins l'une d'une surface d'extrémité du séparateur (14) faisant face à l'anode (26) et une surface d'extrémité du séparateur (16) faisant face à la cathode (30) afin de former le précurseur de couche tampon (18, 20).
